# EUROPEAN PATENT APPLICATION

(11) **EP 3 115 835 A1**
(43) Date of publication of application: **11.01.2017**
(21) Application number: 15175456.1
(22) Date of filing: 06.07.2015
(51) Int. Cl.: G02F 1/1333

(54) **DISPLAY SYSTEM AND METHOD FOR MOUNTING A DISPLAY SYSTEM**

(71) Applicant: ROBERT BOSCH GMBH, 70442 Stuttgart (DE)
(72) Inventor: Silva, Estevao, 4700-723 Braga (PT); Sam, Chee Choong, 11900 Bayan Lepas Penang (MY)

(57) **Abstract**

The invention relates to a display system comprising a display module (3) having at least one fiducial mark (8), characterized in, that the display system (1) comprises a cover element (2) to cover the display module (3), the cover element (2) having an intransparent area (21) to cover an area of the display module (3) and having a first transparent window (22) in the intransparent area (21) to enable viewing an image displayed in the display module (3) and at least one second transparent window (23) at least partly corresponding with the position of the fiducial mark (8) or with at least one of the fiducial marks (8, 33) of the display module (3).

## Description

### Prior Art

A method for aligning a plurality of thin film transistor tiles for constructing a flat panel display is known from US 6,487,461 B1. The tiles of the flat panel display are connected to an alignment apparatus. For the aligning, the relative position of fiducial marks on the tiles is detected. A camera is detecting the fiducial marks for controlling the movement of the at least two chuck assemblies and the thin film transistor tiles.

### Disclosure of the invention

### Advantages of the invention

A display system as disclosed has the advantage that a display module having at least one fiducial mark and for assembling the display system a cover element with at least an intransparent area can be attached to each other with reduced tolerance. The cover element has a first transparent area which enables viewing an image displayed in the display module. At least one additional, second transparent window, which is arranged in a distance to the first transparent window and separated from the first window by an intransparent area of the cover element, allows that the fiducial mark is visible through the second transparent window. The visibility of the fiducial mark allows controlling the position of the fiducial mark on the display module. This enables to adjust the position of the cover element in relation to the display module. By controlling the position of the fiducial mark and by this the position of the display module, a defined position of the cover element in relation to the display module can be achieved.

By the visibility of the fiducial mark, a preferably automated optical control of the position of the cover element is possible. The position of the display module in relation to the cover element can be changed and a specified, desired position can be achieved with a high accuracy. The accuracy by an optical position control may be higher in comparison to a mechanical positioning of the cover element in relation to the display, for example with support by mechanical positional elements, like a pin or a stopper element.

Further, the fiducial mark can be easily identified by a camera. The fiducial mark may have a higher contrast to their surrounding area, for example in comparison to the border structure between the active and the inactive areas of a LCD matrix display. Thus, the fiducial mark enables a detection process and thus a positioning of the cover element with a high reliability and accuracy.

The at least one further, second transparent window is positioned in the cover element in a way, that the window is at least partially corresponding with a position of the fiducial mark. By this, the fiducial mark will be visible within the window, even if the position of the display element in relation to the display module is not fully correct. Since the fiducial mark is at least partially visible, a correction of the position of the fiducial mark and of the display module in relation to the cover element is supported, for example by controlling a movement of the display cover in the desired position enabling good visibility of the display surface of the display module.

It is further an advantage, that the display module is a liquid crystal display or an organic light emitting display module. These display modules are easily available in the market. Some of them are already equipped with fiducial marks which originate from the production of the display module elements itself. Thus, these fiducial marks made for the production of the display cells can be easily reused for attaching the display cover element.

To enable also the use of a display in darkness, the display module comprises a back light module to illuminate the display module.

Further, the fiducial mark can be printed on the element of the display module. By printing a mark structure with a high contrast, an easy identification of the fiducial mark by a camera can be achieved.

To make sure, that the adapted position of the cover element and the display module will stay unchanged, a fixing element to fix both elements, especially in form of a screw, a clamp or a bolt, is used for the display system.

Further, the display system is used in a vehicle to display the driver information about his vehicle, like the vehicle speed. For displaying this information, the second transparent window used for the alignment of the display module and the cover element can be covered by an additional frame which is for example a part of a holding element holding the display system in a vehicle. So the second transparent window is not visible to a user of the vehicle since it is covered by the frame.

Further, comparable advantages can be achieved by a method from mounting a display system whereby a cover element with at least one transparent area and at least one intransparent area is placed over a display module, a camera controls one transparent area of the cover element to detect a fiducial mark of the display module, a control unit compares the detected position of the fiducial mark within the transparent area of the cover with a specified position, and if the position is not corresponding with the specified position, the position of the cover element in relation to the display module is amended and the detection and comparison step is repeated, and if the position is corresponding with the specified position, the relative position of the display module and the cover element is fixed by applying at least one fixing element.

### Short description of the drawings

Figure 1 shows a side view of a cut through an embodiment of a display system,
Figure 2 shows a front view of the display system,
Figure 3 shows an example for mounting the display system in a vehicle,
Figure 4 shows an example for a mounting system to connect a display module with a cover element,
Figure 5 shows an example for a method for mounting a display system.

### Embodiments of the invention

Display systems can be used in different locations. Especially in vehicles is it possible to display a lot of information with a flat panel display which is able to display information on a matrix screen. However, the driver is interested in a high display quality and in a reliable functionality of the display. This is supported by a display cover which protects the display. According to the disclosed embodiment a possibility to attach the display cover highly accurate is shown.

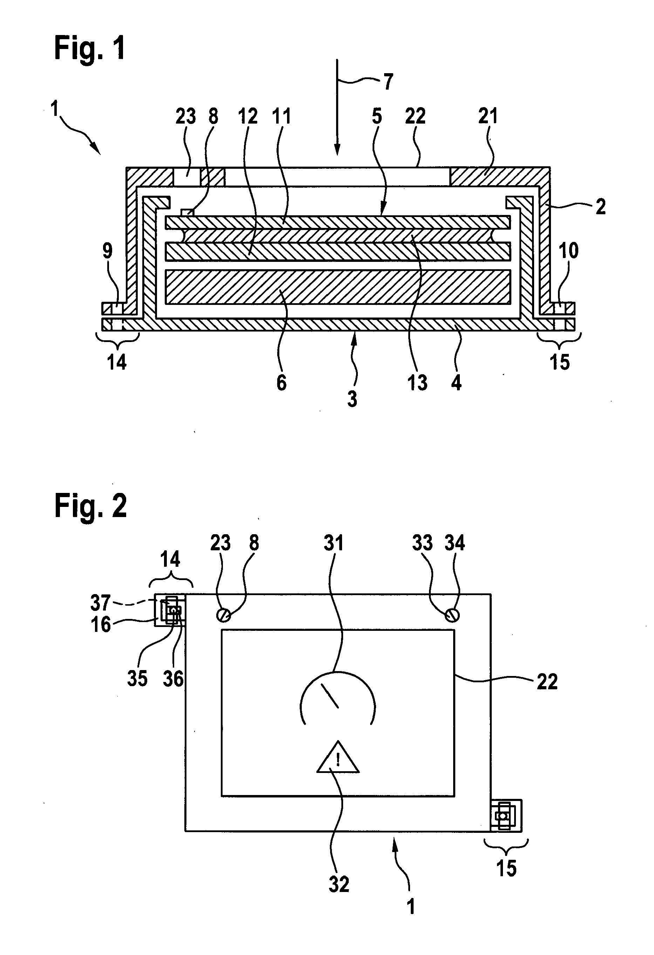

Figure 1 shows a display system 1 which comprises a cover element 2, which covers a display module 3. The display module has a housing 4 in which a display element 5 and preferably a back light module 6 are mounted.

The back light module 6 comprises lighting elements, for example light emitting diodes. The light of the back light module 6 is used to illuminate the display element 5.

In the embodiment shown in Figure 1, the display element 5 is a liquid crystal display element. The display element 5 comprises a first glass plate 11, a second glass plate 12, whereby between the glass plates 11, 12 a liquid crystal material layer 13 is arranged. The display element 5 has a high number of single controllable pixel elements which can be controlled individually to generate an image in the matrix display element. Control elements to generate the image are not shown in Figure 1.

In an alternative embodiment, instead of a liquid crystal display any other flat panel display can be used in the display module, for example an OLED-display.

The display module 3 is covered by the cover element 2. The cover element 2 is preferably made by a plastic material. The cover element has in intransparent area 21 which is achieved by adding a dark color within the material of the cover element. In an alternative embodiment also a dark printing, especially a black printing, is arranged on the outside of the cover element 2.

Further, the cover element 2 has a first transparent window 22 which has the same size or nearly the same size as the area of an active area of the display element 5. By the first transparent window 22 in viewing direction 7 the surface of the display element 5 or the display module 3 is visible. Boundary areas of the display element, preferably the boundary of the active display area, are not visible, since the intransparent cover prohibits a direct view from the viewing direction 7 to the boundary areas of the display element.

Separated from the first transparent window 22 there is a second transparent window 23 in the cover element 2. The position of the second transparent window 23 corresponds to a fiducial mark 8, which is in the discussed embodiment positioned on the first glass plate 11 of the display element. In an alternative embodiment the fiducial mark 8 can be also attached on any other part of the display module 3. Preferably, the fiducial mark 8 is arranged outside an active area of the area of the display element. The fiducial mark 8 may be a short line, e.g. with length between 0.2 cm and 1.2 cm. Also other small geometrical structures like a ring or a triangle can be used as a fiducial mark.

The fiducial mark 8 can be attached on the display element 5 to support the manufacturing process of the display element 5. Further, the fiducial mark 8 can also be attached on the display element 5 only for the mounting process of the display module 3 with the cover element 2.

To protect the display module against damage by dust or by touching, the cover element 2 has transparent windows 22, 23, so that the whole display is covered by the cover element 2. In one embodiment the cover element is made by a transparent material, e.g. glass or plastics. Light may pass the transparent areas not disturbing visibility. In the intransparent areas the visibility through the cover is blocked. In an alternative embodiment the transparent area of the cover element is just an opening within the cover element which is made by an intransparent material.

The second transparent window 23 enables the control of the position of the fiducial mark 8 on the display module 3. By this it is possible that the cover element 2 can be positioned very accurate in relation to the display module 3. By this, it can be avoided that the cover element with the intransparent area covers an important, active area of the display element which is used for display information and which is thus not visible for the driver. Further, it is avoided that any non-active area of the display is visible by a driver. Thus, disturbing of the driver is avoided.

After the desired position of the cover element 2 in relation to the display module 3 is achieved, a fixing element, for example a screw or a bolt, can be used to fix the cover element 2 against the display module 3. In the embodiment according to figure 1 a first fixing hole 9 and a second fixing hole 10 are arranged on a first extension 14 of the cover element 2 and the display module 3 and a third extension 15.

Figure 2 shows a front view on the display system 1. In the first transparent window 22 content visible in the display module 3 is shown. For example a scale display 31 with a pointer, for example to display a speed of the vehicle, and a warning sign 32 are shown. The content of the displayed image can be adapted to the vehicle situation and to sensor data collected by vehicle sensors.

The fiducial mark 8 is visible in the second transparent window 23. In the embodiment shown in Figure 2 a further transparent window 34 is shown with another fiducial mark 33. For a higher accuracy, more than one fiducial mark can be used. For each fiducial mark a corresponding window is preferably used.

The cover element 2 is connected with the display module 3 by at least on fixing element 35, for example a screw or a bolt. To enable flexibility for the positioning of the cover element in relation to the display module within the area of the first extension 14, there is a first groove 36 in a first direction placed in the cover element 2 in the area of the first extension 14. A second groove 37 is arranged rectangular to the first groove 36 within the second extension 16 in the housing 4 of the display module 3. The first extension 14 is arranged on top of the second extension 16 covering at least partly the second extension 16. By these rectangular grooves it is possible to vary the position of the cover element 2 in relation to the display module 3 within two degrees of freedom in the area of the first and second extensions 14, 16. Thus, by controlling the position of the fiducial marks 8, 33 it is possible first to bring the cover element in relation to the display module 3 in a desired position and afterwards fixing this position by inserting a screw or a bolt within the fixing hole 9 in the first extension 14. Comparable grooves and fixing elements can be inserted in the third extension 15. By a second or by further fixing elements the position of the cover element and the display module can be more safely fixed, but also needs more fixing processes and material.

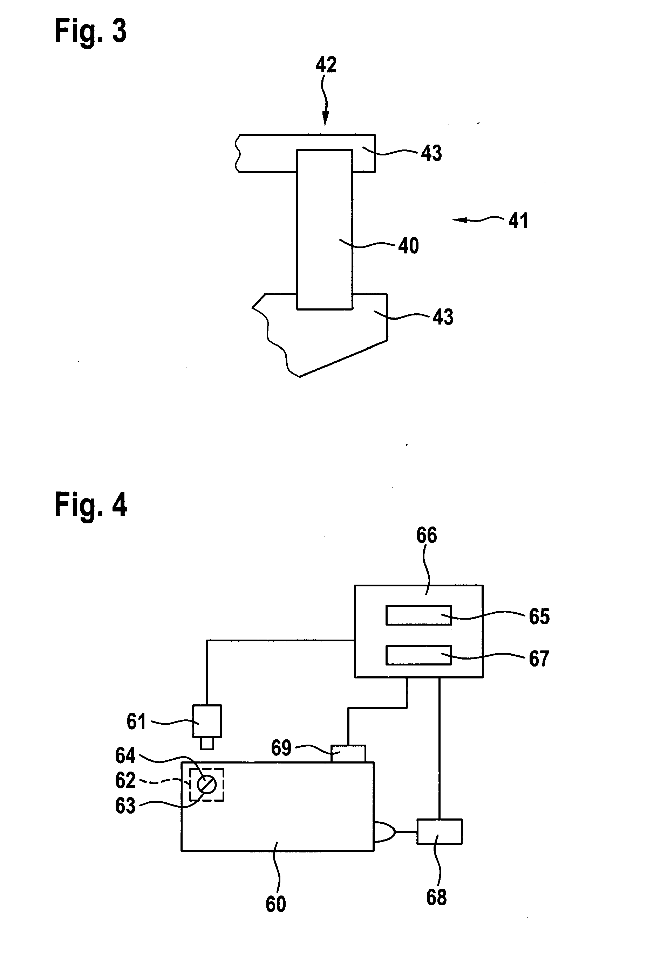

Figure 3 shows a display system 40 which is mounted within a vehicle. In the viewing direction 41 the user can read the content of the display of the display system 40. The display system 40 is mounted in a dash board 42 of a vehicle. The dash board 42 has a frame element 43 which covers at least a boundary area of the display system. In one embodiment of the invention the frame 43 of the dash board covers any transparent windows in the cover element of the display system 40 which are corresponding with fiducial marks. Thus, during using the display system 40 the transparent window enables to watch the content visible in the display surface of the display module. The fiducial marks and the transparent windows are not visible for a driver of a vehicle according to this embodiment.

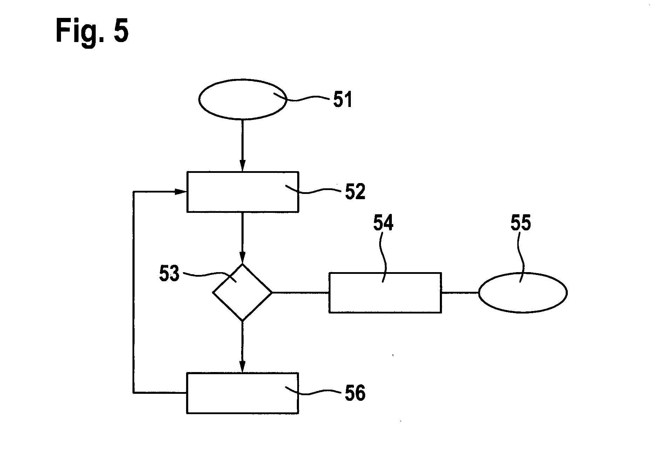

Figure 4 shows a device for a manufacturing method for the display system by arranging a cover element 2 and a display module 3. Figure 5 shows a corresponding method.

In an initialization step 51 a display cover element 60 is arranged on a display module, which is not visible in Figure 4. In a detection step 52 a camera 61 takes a picture of an area 62 of the cover element comprising a transparent window 63 and a fiducial mark 64, which is visible in the transparent window 63. The picture taken by the camera 61 is transferred to a control unit 65 with a processor 66 evaluating the camera picture. In a comparison step 53 the detected position of the fiducial mark 64 is compared with a specified, desired position of the fiducial mark in the transparent window 63 whereby the desired position is stored in a memory 67 in the control unit 65.

If the position of the fiducial mark is in line with a desired position stored in the memory 67, the control unit 65 activates in a fixing step 54 a fixing tool 68 which inserts a screw or a bolt into the cover element 60 to fix the cover element 60 to the display module in the current position. Afterwards, in a final step 55 the mounting of the cover element 60 is finished and the mounted display system can be taken out of the manufacturing device.

If the control unit 65 and the processor 66 decide in the comparison step 53, that the fiducial mark 64 is not in the right position, the method will be continued with an alignment step 56. In the alignment step 56 the control unit 65 with the processor 66 calculates a deviation of the detected position of the fiducial mark 64 from the desired position to calculate a direction of movement, in which the cover element 60 should be moved in relation to the display module. By this, an activation element 69 is controlled by the control unit 65 to move the cover element. Afterwards, the method will be continued with the detection step 52 to newly detect the position of the fiducial mark.

## Claims

1. Display system comprising a display module (3) having at least one fiducial mark (8), **characterized in, that** the display system (1) comprises a cover element (2) to cover the display module (3), the cover element (2) having an intransparent area (21) to cover an area of the display module (3) and having a first transparent window (22) in the intransparent area (21) to enable viewing an image displayed in the display module (3) and at least one second transparent window (23) at least partly corresponding with the position of the fiducial mark (8) or with at least one of the fiducial marks (8, 33) of the display module (3).

2. Display system according to claim 1, **characterized in, that** the display module (3) is a liquid crystal display or an organic light emitting display module.

3. Display system according to one of the previous claims, **characterized in, that** the display module (3) comprises a backlight module (6) to illuminate the display module (3).

4. Display system according to one of the previous claims, **characterized in, that** the at least one fiducial mark (8) is printed on an element of the display module (3).

5. Display system according to one of the previous claims, **characterized in, that** the display module is mechanically connected with the cover element by at least one fixing element (35) avoiding movement of the display module in relation to the cover element.

6. Display system according to claim 5, **characterized in, that** the at least one fixing element is a screw, a clamp or a bolt.

7. Display device especially for a vehicle with a display system according to one of the previous claims, **characterized in, that** the display device has a frame (43) to cover the second window of the cover element.

8. Method for mounting a display system, whereby a cover element with at least one transparent area and at least one intransparent area is placed over a display module, a camera controls one transparent area of the cover element to detect a fiducial mark of the display module, a control unit compares the detected position of the fiducial mark within the transparent area of the cover with a specified position and if the position is not corresponding with the specified position, the position of the cover element in relation to the display module is amended and the detection and comparison step is repeated, and if the position is corresponding with the specified position, the relative position of the display module and the cover element is fixed by applying at least one fixing element.
